# EUROPÄISCHE PATENTSCHRIFT

(11) **EP 2 518 345 B1**
(45) Veröffentlichungstag und Bekanntmachung des Hinweises auf die Patenterteilung: **19.12.2018**
(21) Anmeldenummer: 12165001.4
(22) Anmeldetag: 20.04.2012
(51) Int. Cl.: F16C 29/06, F16C 29/08, F16C 29/00, B23Q 11/08

(54) **ABDECKUNG ZUR AUFNAHME EINES PROFILSCHIENENWAGENS EINES LINEARLAGERS**
COVERING FOR RECEIVING A CARRIAGE EMBRACING THE PROFILED RAIL OF A LINEAR BEARING
CAPOT DE PROTECTION POUR LE LOGEMENT D'UN CHARIOT ENGLOBANT LA GLISSIÈRE PROFILÉE D'UN PALIER LINÉAIRE

(30) Priorität: 29.04.2011 DE 102011017759
(43) Veröffentlichungstag der Anmeldung: 31.10.2012
(73) Patentinhaber: Aktiebolaget SKF, 415 50 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(56) Entgegenhaltungen:
- EP-A2- 1 013 950
- DE-A1- 10 360 292
- JP-A- H09 264 323
- US-A- 5 871 283
- US-B1- 6 296 413

## Beschreibung

Ausführungsbeispiele beziehen sich auf eine Abdeckung zur Aufnahme eines Profilschienenwagens.

Eine Linearführung stellt eine Anordnung dar, die eine möglichst reibungsarme Translationsbewegung einer oder mehrerer beweglicher Baugruppen einer Maschine entlang einer Bewegungsrichtung ermöglicht. Die Bewegungsrichtung stellt in vielen Anwendungsfällen eine lineare Bahn dar, die jedoch nicht auf eine Gerade im mathematischen Sinn beschränkt ist. Daher werden im Bereich der Linearführungen häufig die Begriffe "linear" und "translatorisch" synonym verwendet.

Je nach verwendetem Konzept werden Linearführungen typischerweise in Gleitführungen oder Wälzführungen unterteilt, wobei die Wälzführungen darauf beruhen, dass Wälzkörper zwischen zwei sich zueinander relativ bewegenden Laufbahnen abgewälzt werden. Als Wälzkörper dienen beispielsweise Kugeln, Zylinder, Nadeln, Tonnen oder andere Wälzkörper.

Zu den Linearwälzlagern zählen unter anderem auch Profilschienenführungen. Bei diesen umgreifen sogenannte Profilschienenwagen, Führungswagen oder Laufwagen eine Führungsschiene bzw. Profilschiene. Profilschienenwagen weisen daher häufig einen im Wesentlichen U-förmigem Querschnitt auf. Der Profilschienenwagen ist dabei auf der Führungsschiene mithilfe von Wälzkörpern gelagert.

Die wälzgelagerten Linearführungen werden hierbei in endliche und unendliche Führungen unterteilt. So weisen die endlichen Linearführungen typischerweise lediglich einen begrenzten Hub entlang der Bewegungsrichtung auf. Im Unterschied hierzu weisen unendliche Linearführungen eine prinzipiell nur durch die Länge der betreffenden Laufbahn oder der betreffenden Profilschiene begrenzten Hub auf. Da die Wälzkörper sich typischerweise mit der Hälfte einer Relativgeschwindigkeit der beiden sich zueinander bewegenden Komponenten bewegen, erfordert dies im Allgemeinen, dass die Wälzkörper zurückgeführt werden müssen, um nur durch die Länge der entsprechenden Laufbahn bzw. Profilschiene begrenzte Bewegungsmöglichkeit zu schaffen.

Profilschienenführungen stellen typischerweise entsprechende unendliche Führungen dar, sodass die entsprechenden Profilschienenwagen eine entsprechende Wälzkörperrückführung aufweisen. Profilschienenwagen umfassen daher im Allgemeinen wenigstens einen Lastbereich, in dem die Wälzkörper sich auf einer Laufbahn des Profilschienenwagens einerseits und auf einer Laufbahn der betreffenden Profilschiene oder Führungsschiene andererseits bewegen, sowie einen Rücklaufbereich, in dem sich die Wälzkörper im Wesentlichen entgegengesetzt der Richtung in dem Lastbereich bewegen. Wenigstens ein Umlenkbereich, der zwischen dem Lastbereich und dem Rücklaufbereich angeordnet ist, sorgt für den Übertritt der Wälzkörper aus dem Lastbereich in den Rücklaufbereich. Häufig weisen entsprechende Profilschienenwagen ferner einen zweiten Umlenkbereich auf, der zusammen mit dem zuerst genannten Umlenkbereich, dem Lastbereich und dem Rücklaufbereich eine geschlossene Wälzkörperführung innerhalb des Profilschienenwagens ermöglicht.

Profilschienenwagen und entsprechende Profilschienenführungen werden bei der Vielzahl von Anwendungsszenarien eingesetzt, bei denen Baugruppen einer Maschine relativ zueinander entlang einer linearen Bahn bewegt werden. Die entsprechenden Linearführungen können hierbei einer Vielzahl unterschiedlicher Umweltbedingungen ausgesetzt werden. So werden Linearführungen beispielsweise innerhalb von Medien eingesetzt, die in das Innere des Profilschienenwagens eindringen können, und so gegebenenfalls seine Funktionsfähigkeit oder seiner Lebensdauer nachteilig beeinträchtigen können. Hierzu zählen neben festen Stoffen, wie zum Beispiel staubförmigen oder granularen Substanzen, ebenso flüssige oder gasförmige Medien, die gegebenenfalls aufgrund chemischer Wechselwirkungen mit den Profilschienenwagen oder seiner Bestandteile seine Funktionstüchtigkeit oder seiner Lebensdauer nachteilig beeinträchtigen könnten. So werden Profilschienenwagen beispielsweise unter Umweltbedingungen eingesetzt, die eine Korrosion des Materials des Profilschienenwagens fördern können.

Aber auch die zuvor genannten festen Medien können beispielsweise in den Profilschienenwagen eindringen und dort zwischen die Wälzkörper und die Laufbahn des Profilschienenwagens oder der Profilschiene gelangen und dort zu einem Blockieren des Wälzkörpers oder zu abrasiven Effekten im Bereich der betreffenden Laufbahn oder des betreffenden Wälzkörpers führen.
Ebenso ist es möglich, dass während des Betriebs des Profilschienenwagens dieser mit einem Hindernis, etwa einer größeren Ansammlung eines festen Mediums, kollidieren könnte, was zu einem Schaden des Profilschienenwagens führen könnte.

Weitere Umwelteinflüsse umfassen Strahlungen, also beispielsweise eine Infrarotstrahlung oder auch eine sichtbare Strahlung

Die EP 1 013 950 A2 und die US 5 871 283 A zeigen eine zwischen zwei Profilschienenwagen angeordneten Abdeckung, die an einem Tisch befestigt werden. In Ausführungsbeispielen der EP 1 013 950 A2 können zur seitlichen Abdeckung eines Führungswagens Ergänzungswände vorgesehen sein.

Die US 6 296 413 B1 und die JP H09 264 323 A zeigen Faltenbalgabdeckungen, die jeweils zwischen einem Führungswagen und einem Ende der Führungsschiene angeordnet sind.

Aus obengenanntem Grund besteht ein Bedarf, einen Schutz eines Profilschienenwagens vor einem Umwelteinfluss zu verbessern.

Dieser Bedarf wird durch eine Abdeckung zur Aufnahme eines Profilschienenwagens nach Anspruch 1 oder durch ein System umfassend ein Profilschienenwagen und eine Abdeckung nach Anspruch 14 befriedigt.
Ein Ausführungsbeispiel einer Abdeckung zur Aufnahme eines Profilschienenwagens in einem Innenraum der Abdeckung umfasst eine erste Stirnfläche und eine zweite Stirnfläche, die an in einer Bewegungsrichtung des Profilschienenwagens gegenüberliegenden Seite den Innenraum in der Bewegungsrichtung begrenzen. Es umfasst ferner eine erste Seitenfläche und eine zweite Seitenfläche, die an in einer zu der Bewegungsrichtung des Profilschienenwagens senkrechten Richtung gegenüberliegenden Seiten den Innenraum in der senkrechten Richtung begrenzen, wobei die Stirnflächen jeweils eine Ausnehmung aufweisen, und wobei die Ausnehmungen eine Form aufweisen, sodass eine Profilschiene die Ausnehmungen wenigstens mit einem Teil ihrer Querschnittsform passieren kann, um einem in dem Innenraum angeordneten Profilschienenwagen eine Bewegung entlang der Profilschiene zu ermöglichen. Die Abdeckung lässt hierbei eine Oberseite wenigstens in einem Montagebereich des Profilschienenwagens offen.

Ein Ausführungsbeispiel eines Systems umfasst einen Profilschienenwagen und eine solche Abdeckung, wobei der Profilschienenwagen in dem Innenraum angeordnet ist, und wobei der Profilschienenwagen ein in der Bewegungsrichtung des Profilschienenwagens angeordnetes Bauteil mit einem Schmiermittelreservoir aufweist. Das Bauteil weist eine in die Bewegungsrichtung weisende Schmiermittelöffnung auf, sodass durch die Schmiermittelöffnung das Schmiermittelreservoir nachfüllbar ist, wobei wenigstens eine Stirnfläche der Abdeckung eine weitere Ausnehmung aufweist, sodass die Abdeckung über die weitere Ausnehmung mit einem in die Schmiermittelöffnung einbringbaren weiteren Bauteil mit dem Profilschienenwagen verbunden ist.

Ausführungsbeispielen liegt die Erkenntnis zugrunde, dass ein Schutz eines Profilschienenwagens dadurch verbesserbar ist, in dem dieser in dem Innenraum der Abdeckung gemäß einem Ausführungsbeispiel angeordnet wird. Um einen Betrieb des Profilschienenwagens auf einer Profilschiene zu ermöglichen, weisen die Stirnflächen hierbei jeweils eine Ausnehmung auf, die ihrerseits eine Form aufweisen, sodass eine Profilschiene die betreffende Ausnehmung wenigstens mit einem Teil ihrer Querschnittsform passieren kann, um dem in dem Innenraum angeordneten Profilschienenwagen eine Bewegung entlang der Profilschiene zu ermöglichen. Um eine Integration des Profilschienenwagens in eine größere Baugruppe zu ermöglichen, lässt die Abdeckung eine Oberseite wenigstens in einem Montagebereich des Profilschienenwagens offen. Diese Abdeckung stellte so einen Schutz dar, der ein unmittelbares Einwirken eines Umwelteinflusses auf den Profilschienenwagen unterbindet, jedoch zumindest verringert.

Bei Ausführungsbeispielen kann die Abdeckung die Oberseite vollständig offen lassen, sodass eine flexiblere Integration in eine gegebenenfalls bestehende Baugruppe erfolgen kann, da die betreffende Baugruppe gegebenenfalls konstruktiv nicht durch ein nachträgliches Anbringen einer Abdeckung gemäß einem Ausführungsbeispiel modifiziert werden muss.

Bei Ausführungsbeispielen kann wenigstens eine der Ausnehmungen in den Stirnflächen ein Dichtelement aufweisen, das ausgebildet ist, um die Stirnfläche gegen die Profilschiene abzudichten, um ein Eindringen eines gasförmigen, eines flüssigen oder eines festen Mediums in den Innenraum zu reduzieren oder zu unterbinden. Hierdurch ist es möglich, den Profilschienenwagen gegen eine Verschmutzung zu schützen oder auch einen Korrosionsschutz zu verbessern oder eine zusätzliche Abdichtung gegenüber der Profilschiene zu erzielen. Hierdurch kann eine Abstreifwirkung erzielt werden.

Bei Ausführungsbeispielen kann die Abdeckung an wenigstens 80 % einer Gesamtoberfläche der dem Innenraum abgewandten Seite der ersten Seitenfläche, der zweiten Seitenfläche, der ersten Stirnfläche und der zweiten Stirnfläche eine Oberfläche mit einer mittleren Rauheit von weniger als 100 µm, eine Beschichtung oder eine Lackierung aufweisen, wobei die Beschichtung beispielsweise Teflon oder Email umfasst. Hierdurch ist es möglich, den Profilschienenwagen bzw. das System, welches neben den Profilschienenwagen ebenfalls die Abdeckung umfasst, leichter zu reinigen, was zu einer Erleichterung von Reinigungsarbeiten beitragen kann. Ebenso können hierdurch Korrosionsschutzeigenschaften verbessert werden. Bei weiteren Ausführungsbeispielen kann der Anteil auch bei wenigstens 90 % oder bei wenigstens 95 % einer Gesamtoberfläche liegen. Ebenso kann bei Ausführungsbeispielen eine mittlere Rauheit von weniger als 80 µm, von weniger als 50 µm, von weniger als 20 µm, von weniger als 10 µm oder von weniger als 2 µm vorgesehen sein. Hierdurch kann gegebenenfalls die Reinigungsmöglichkeit noch weiter erleichtert oder aber einen Korrosionsschutz noch verbessert werden, da entsprechenden Medien aufgrund der geringeren mittleren Rauheit eine kleinere Angriffsfläche geboten wird.

Bei Ausführungsbeispielen kann die Abdeckung in dem Innenraum an wenigstens einem Teil der ersten Seitenfläche, der zweiten Seitenfläche, der ersten Stirnseite oder der zweiten Stirnseite ein geräuschdämmendes Material aufweisen, sodass Geräusche, die während des Betriebs des Profilschienenwagens erzeugt werden, durch die Abdeckung verringert werden. Anders ausgedrückt können so Ausführungsbeispiele eine Reduzierung von Geräuschen bewirken, die durch den Betrieb des Profilschienenwagens hervorgerufen werden. So kann bei Ausführungsbeispielen ein Hohlraum an wenigstens einem Teil der genannten Seiten ausgeschäumt werden. Als Material kann beispielsweise ein Melaminharzschaum oder ein anderer Schaum aus einem Kunststoff oder einer organischen Verbindung verwendet werden.

Um einen Stoßschutz des Profilschienenwagens zu verbessern, kann bei Ausführungsbeispielen die Abdeckung derart ausgebildet sein, dass ein in dem Innenraum angeordneter Profilschienenwagen gegen einen Stoß aus der Bewegungsrichtung bis zu einer vorbestimmten kinetischen Energie geschützt ist. Die vorbestimmte kinetische Energie kann bei Ausführungsbeispielen einer kinetischen Energie entsprechen, die durch eine Gesamtmasse der Abdeckung, des Profilschienenwagens und einer maximal zulässigen Belastung des Profilschienenwagens bei einem Zehntel einer für den Profilschienenwagen maximal zulässigen Geschwindigkeit gegeben sein. Bei Ausführungsbeispielen kann die vorbestimmte kinetische Energie auch einer kinetischen Energie entsprechen, die bei einem Fünftel, einem Viertel, einem Drittel oder einer Hälfte der für den Profilschienenwagen maximal zulässigen Geschwindigkeit gegeben ist. Hierbei kann die Abdeckung an wenigstens einer der Stirnflächen oder wenigstens einer der Seitenflächen eine energieabsorbierende Struktur aufweisen, die ausgebildet ist, eine kinetische Energie, die die vorbestimmte kinetische Energie nicht übersteigt, aufzunehmen. Die Struktur kann hierbei derart ausgebildet sein, dass die Energie wenigstens teilweise in eine elastische, eine plastische oder eine thermische Energie umgewandelt wird.
Bei Ausführungsbeispielen kann darüber hinaus die erste Seitenfläche, die zweite Seitenfläche, die erste Stirnfläche oder die zweite Stirnfläche derart ausgebildet sein, dass eine Strahlung mit einer vorbestimmten Frequenz zumindest teilweise oder auch vollständig reflektiert wird. Hierbei kann sich beispielsweise um eine Infrarotstrahlung und/oder eine sichtbare Strahlung handeln. Hierdurch ist es gegebenenfalls möglich, den in dem Innenraum angeordneten Profilschienenwagen vor Auswirkungen einer auf das System einwirkenden Strahlung zu schützen. So kann es beispielsweise möglich sein, eine Temperatur des Profilschienenwagens zu reduzieren, wenn dieser beispielsweise an einem heißen Gegenstand oder einer anderen heißen Quelle (z. B. einem Ofen) vorbeifährt.
Bei Ausführungsbeispielen kann darüber hinaus die Abdeckung ferner eine Unterseitenfläche aufweisen, die der Oberseite gegenüberliegt und entlang einer zweiten Richtung, die senkrecht auf der Bewegungsrichtung des Profilschienenwagens steht und von der zuvor genannten senkrechten Richtung verschieden ist, den Innenraum begrenzt. Die Unterseitenfläche kann hierbei eine Längsausnehmung aufweisen, sodass die Profilschiene diese Ausnehmung wenigstens teilweise passieren kann, um dem in dem Innenraum angeordneten Profilschienenwagen eine Bewegung entlang der Profilschiene zu ermöglichen. Hierzu kann die Unterseitenfläche eine erste Teilfläche und eine zweite Teilfläche aufweisen, wobei die erste Teilfläche mit der ersten Seitenfläche, der ersten Stirnfläche und einer zweiten Stirnfläche verbunden ist, und wobei die zweite Teilfläche mit der zweiten Seitenfläche, der ersten Stirnfläche oder der zweiten Stirnfläche verbunden ist. Hierdurch ist es möglich, einen Schutz des Profilschienenwagens auch von einer Unterseite her zu verbessern, die der Oberseite gegenüberliegt.
Bei Ausführungsbeispielen kann die Abdeckung ferner ausgebildet sein, um einen weiteren Profilschienenwagen in dem Innenraum aufzunehmen. Hierdurch ist es möglich, mehr als einen Profilschienenwagen durch eine gemeinsame Abdeckung zumindest teilweise zu umgeben, sodass beispielsweise durch einen einfachen modularen Aufbau mit mehreren Profilschienenwagen ein höher belastbares System geschaffen wird, welches durch die gemeinsame Abdeckung wenigstens teilweise umgeben wird, ohne dass Zwischenräume zwischen mehreren Abdeckungen entstehen.
Bei Ausführungsbeispielen kann die Abdeckung einteilig bzw. einstückig ausgeführt sein, sodass gegebenenfalls Spalte reduziert oder vermieden werden können, was die zuvor genannten Eigenschaften gegebenenfalls positiv beeinflussen kann.
Bei Ausführungsbeispielen kann wenigstens eine der Seitenflächen eine seitliche Ausnehmung oder eine vorbestimmte Teilfläche aufweisen, wobei die Teilfläche von einem materialgeschwächten Bereich wenigstens teilweise umgeben ist, sodass die Teilfläche entfernbar ist, um die seitliche Ausnehmung zu bilden. Hierdurch ist es möglich, eine seitliche Teilfläche des Profilschienenwagens durch die seitliche Ausnehmung zugänglich zu machen, wobei die seitliche Teilfläche des Profilschienenwagens beispielsweise eine besondere Eigenschaft, etwa eine genaue spezifizierte Position oder eine genau spezifizierte Dimension aufweisen kann.
Bei Ausführungsbeispielen kann darüber hinaus die Abdeckung geometrisch derart ausgebildet sein, dass eine Strömungseigenschaft des Profilschienenwagens verbessert wird, sodass eine Bewegung in einem gasförmigen, flüssigen oder festen Medium eine geringere Reibung an dem Medium zur Folge hat. Hierdurch ist es möglich, eine Verbesserung der Umströmungseigenschaften und damit des Designs des Profilschienenwagens zu erzielen.
Bei einem Ausführungsbeispiel in der Form eines Systems mit einem Profilschienenwagen und einer Abdeckung ist es möglich, dass die Abdeckung eine weitere Ausnehmung in wenigstens einer der Stirnflächen aufweist, sodass über diese weitere Ausnehmung eine einfache Montage der Abdeckung an dem Profilschienenwagen möglich ist. Dies ist beispielsweise der Fall, wenn der Profilschienenwagen ein in der Bewegungsrichtung angeordnetes Bauteil mit einem Schmiermittelreservoir aufweist, wobei das Bauteil eine in die Bewegungsrichtung weisende Schmiermittelöffnung aufweist, sodass durch die Schmiermittelöffnung das Schmiermittelreservoir nachfüllbar ist. Die weitere Ausnehmung ist hierbei derart angeordnet, dass die Abdeckung über diese weitere Ausnehmung mit einem in die Schmiermittelöffnung einbringbaren weiteren Bauteil mit dem Profilschienenwagen verbunden ist. Bei dem weiteren Bauteil kann es sich beispielsweise um einen Schmiernippel oder einen Gewindestift handeln.

Bei einem Ausführungsbeispiel in Form eines solchen Systems kann dieses ferner einen zweiten Profilschienenwagen aufweisen. Der Profilschienenwagen wird hierbei über das weitere Bauteil mit der ersten Stirnfläche der Abdeckung verbunden. Der zweite Profilschienenwagen weist - entsprechend dem ersten Profilschienenwagen - ein in der Bewegungsrichtung des zweiten Profilschienenwagens angeordnetes zweites Bauteil mit einem Schmiermittelreservoir auf, wobei das zweite Bauteil ebenfalls eine in die Bewegungsrichtung bzw. entgegen der Bewegungsrichtung weisende Schmiermittelöffnung aufweist, sodass durch die Schmiermittelöffnung das Schmiermittelreservoir nachfüllbar ist. Die zweite Stirnfläche der Abdeckung weist hierbei eine zweite weitere Ausnehmung auf, sodass die Abdeckung über die zweite weitere Ausnehmung mit einem in die Schmiermittelöffnung des zweiten Bauteils einbringbaren zweiten weiteren Bauteil mit den zweiten Profilschienenwagen verbunden ist. Hierdurch ist es möglich, auch im Falle eines Systems mit mehreren Profilschienenwagen und einem gemeinsamen Gehäuse eine sehr leichte und einfache Montage zu ermöglichen.

Ausführungsbeispiele einer Abdeckung können hierbei ein Metall, eine Metalllegierung, also beispielsweise einen Niroblech, einem Nirostahl, einen Stahl oder einen Kunststoff aufweisen oder aus diesem bestehen.

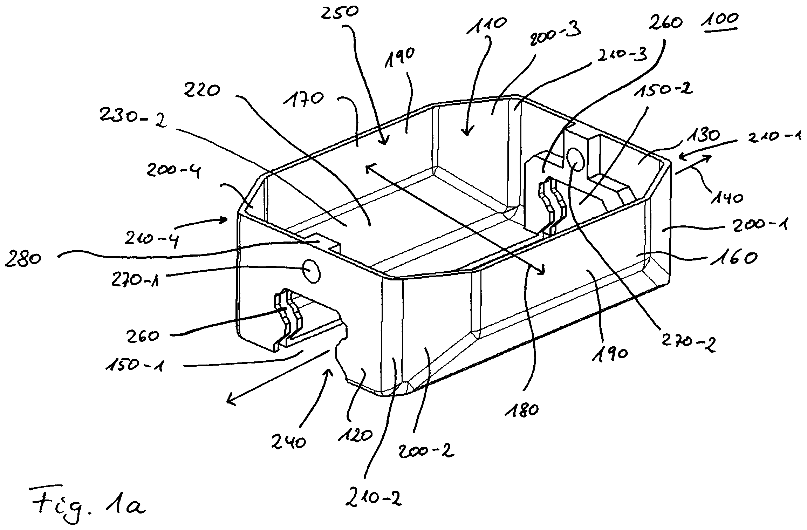

Ausführungsbeispiele werden nachfolgend unter Bezugnahme auf die beigefügten Figuren näher beschrieben.
Fig.1a zeigt eine perspektivische Darstellung einer Abdeckung gemäß einem Ausführungsbeispiel;
Fig.lb zeigt eine perspektivische Darstellung einer Abdeckung gemäß einem weiteren Ausführungsbeispiel;
Fig.2 zeigt eine perspektivische Darstellung einer Abdeckung mit einer seitlichen Ausnehmung gemäß einem weiteren Ausführungsbeispiel;
Fig.3 zeigt eine perspektivische Darstellung eines Systems mit einem Profilschienenwagen und einer Abdeckung, die auf einer Profilschiene angeordnet sind;
Fig. 4 zeigt eine Explosionsdarstellung des in Fig.3 dargestellten Systems;
Fig.5 zeigt eine perspektivische Darstellung eines Systems gemäß einem Ausführungsbeispiel mit zwei Profilschienenwagen;
Fig.6 zeigt eine Explosionsdarstellung des in Fig.5 gezeigten Systems;
Fig.7 zeigt eine alternative Umsetzung mithilfe zweier Systeme gemäß Ausführungsbeispielen; und
Fig.8 zeigt eine Explosionsdarstellung der in Fig. 7 dargestellten Systeme gemäß Ausführungsbeispielen.
Bevor im Zusammenhang mit den Figuren 1a bis 8 Ausführungsbeispiele näher beschrieben und hinsichtlich ihrer Funktionsweise näher erläutert werden, bietet es sich an darauf hinzuweisen, dass im Rahmen der vorliegenden Beschreibung zusammenfassende Bezugszeichen für Objekte, Strukturen und andere Entitäten verwendet werden, wenn auf die betreffende Entität an sich, mehrerer entsprechende Entitäten innerhalb eines Ausführungsbeispiels oder innerhalb mehrerer Ausführungsbeispiele oder die betreffende Gattung von Entitäten näher eingegangen wird. Hierdurch ist es möglich, die Beschreibung knapper und kürzer zu halten, da unnötige Wiederholungen vermieden werden können, da Beschreibungen die sich auf eine Entität beziehen, auch auf andere Entitäten in anderen Ausführungsbeispielen übertragbar sind, soweit dies nicht explizit anders angegeben ist oder sich aus dem Zusammenhang ergibt. Im Unterschied hierzu werden, wenn einzelne Entitäten bezeichnet werden, individuelle Bezugszeichen verwendet, die auf den entsprechenden zusammenfassenden Bezugszeichen basieren. Entitäten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt werden. Es ist so beispielsweise möglich, dass mehrere Entitäten innerhalb eines Ausführungsbeispiels bezüglich eines Parameters identisch, bezüglich eines anderen Parameters jedoch unterschiedlich ausgeführt sein können.

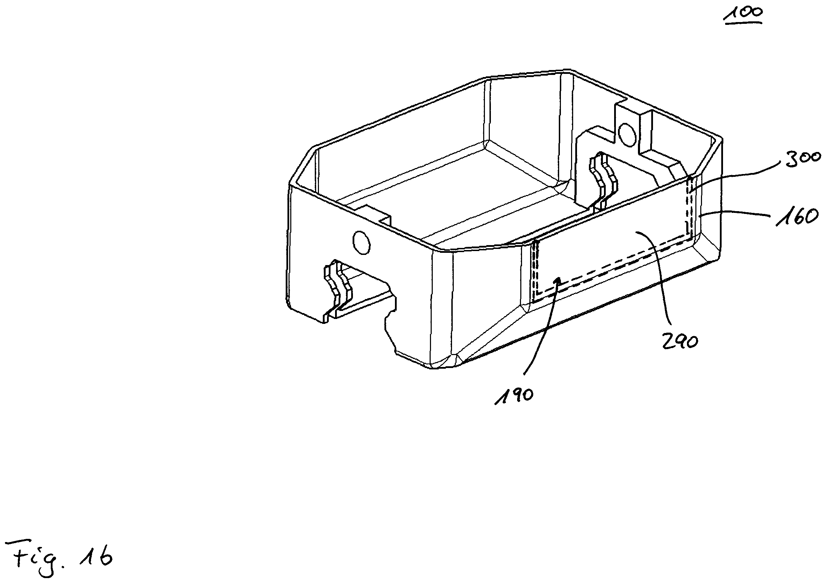

Fig. 1 zeigt eine Abdeckung 100 gemäß einem Ausführungsbeispiel. Die Abdeckung 100 weist einen Innenraum 110 auf, der zur Aufnahme eines Profilschienenwagens dient, der in Fig.1 nicht gezeigte ist. Die Abdeckung 100 weist eine erste Stirnfläche 120 und eine zweite Stirnfläche 130 auf, die an in einer Bewegungsrichtung 140 des Profilschienenwagens gegenüberliegenden Seiten den Innenraum 110 in der Bewegungsrichtung 140 begrenzen. Die beiden Stirnflächen 120, 130 weisen hierbei jeweils eine Ausnehmung 150 auf. Genauer gesagt weist die erste Stirnfläche 120 eine erste Ausnehmung 150-1 und die zweite Stirnfläche 130 eine weitere Ausnehmung 150-2 auf, die entlang der Bewegungsrichtung 140 angeordnet sind. Die Bewegungsrichtung 140 stellt so die Richtung dar, die die beiden Ausnehmungen 150 in den beiden Stirnflächen 120, 130 miteinander verbindet.

Die Ausnehmungen 150 weisen eine Form auf, sodass eine Profilschiene, die in Fig.1 nicht gezeigte ist, die Ausnehmungen 150 wenigstens mit einem Teil ihrer Querschnittsform passieren kann, um dem in dem Innenraum angeordneten Profilschienenwagen eine Bewegung entlang der entsprechenden Profilschiene zu ermöglichen. Bei den in Fig.1 gezeigten Ausnehmungen 150 weisen diese ferner eine Form auf, die einem Teil der Querschnittsform der Profilschiene derart entspricht, dass zwischen den Ausnehmungen 150 und der Profilschiene ein Spalt mit einem maximalen Spaltmaß gebildet wird, der bei unterschiedlichen Ausführungsbeispielen unterschiedliche Werte annehmen kann. Das Spaltmaß beträgt bei unterschiedlichen Ausführungsbeispielen typischerweise maximal 10 mm, 5 mm, 2 mm, 1 mm oder 500 µm. Hierdurch kann so eine Spaltdichtung zwischen Abdeckung 100 und der in Fig. 1 nicht gezeigten Profilschiene gebildet werden.

Die Abdeckung 100 weist ferner eine erste Seitenfläche 160 und eine zweite Seitenfläche 170 auf, die senkrecht zu einer Richtung 180, die zu der Bewegungsrichtung 140 des Profilschienenwagens senkrecht verläuft, stehen und den Innenraum 110 in der Richtung 180 begrenzen. Bei dem in Fig. 1 gezeigten Ausführungsbeispiel weisen die erste und die zweite Seitenfläche 160, 170 jeweils eine zentrale Fläche 190 auf, die über Zwischenflächen 200, genauer gesagt Zwischenflächen 200-1, 200-2, 200-3 und 200-4 mit den Stirnflächen 120, 130 verbunden sind. Die Zwischenflächen 200 sind hierbei in den entsprechenden Seitenflächen 160, 170 umfasst und mit den Stirnflächen 120, 130 über Rundungsbereiche 210 verbunden. Diese Rundungsbereiche 210 weisen häufig einen Krümmungsradius auf, der typischerweise im Bereich zwischen 0,5 mm und 50 mm je nach Größe der Abdeckung 100 und des darin unterzubringenden Profilschienenwagens liegt. Ausführungsbeispiele umfassen jedoch auch solche für größere oder kleinere Profilschienenwagen.
Die Abdeckung 100 weist ferner eine Unterseitenfläche 220 auf, die bei dem in Fig. 1 aber gezeigten Ausführungsbeispiel einer Abdeckung eine erste untere Teilfläche 230-1 und eine zweite untere Teilfläche 230-2 aufweist. Die erste untere Teilfläche 230-1 ist bei der in Fig. 1a gezeigten Darstellung durch die erste Seitenfläche 160 verdeckt ist. Die erste untere Teilfläche 230-1 ist hierbei mit der ersten Seitenfläche 160 mechanisch verbunden, während die zweite untere Teilfläche 230-2 mit der zweiten Seitenfläche 170 verbunden ist.
Zwischen den beiden unteren Teilflächen 230 ist bei dem in Fig. 1a gezeigten Ausführungsbeispiel einer Abdeckung 100 eine Längsausnehmung 240 gebildet, welche sich entlang der Bewegungsrichtung 140 vollständig durch die Abdeckung 100 erstreckt. Die Längsausnehmung 240 hat hierbei in der Richtung 180 eine Breite, sodass zwischen der Abdeckung 100 und der Profilschiene, welche in Fig. 1a nicht gezeigte ist, höchstens ein Spalt entsteht, der das zuvor erwähnte maximale Spaltmaß aufweist. Bei weiteren Ausführungsbeispielen kann die Abdeckung 100 gegebenenfalls auch ohne eine entsprechende Längsanordnung 240 implementiert sein, wenn beispielsweise die Abdeckung 100 die Profilschiene vollständig umschließen kann.

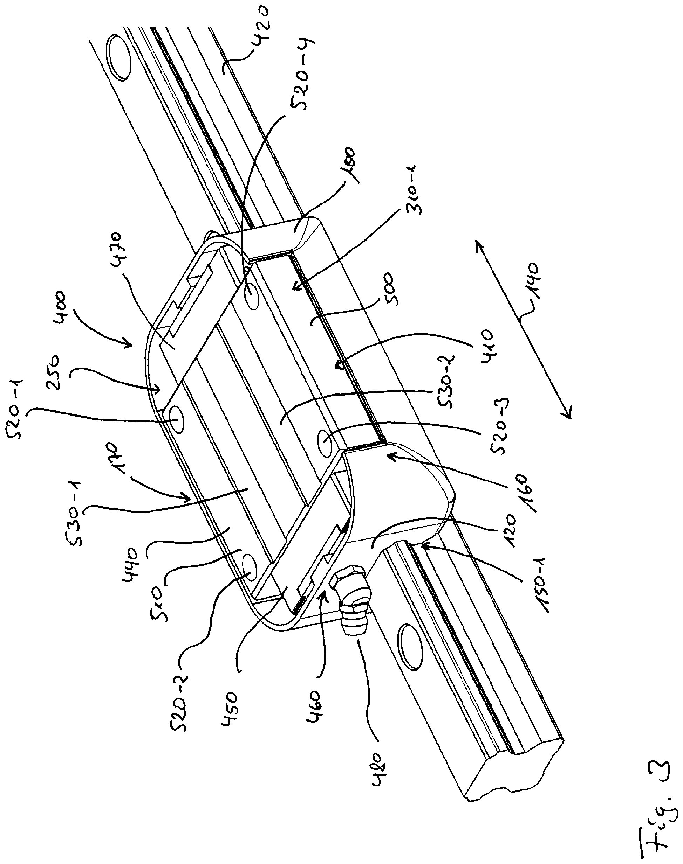

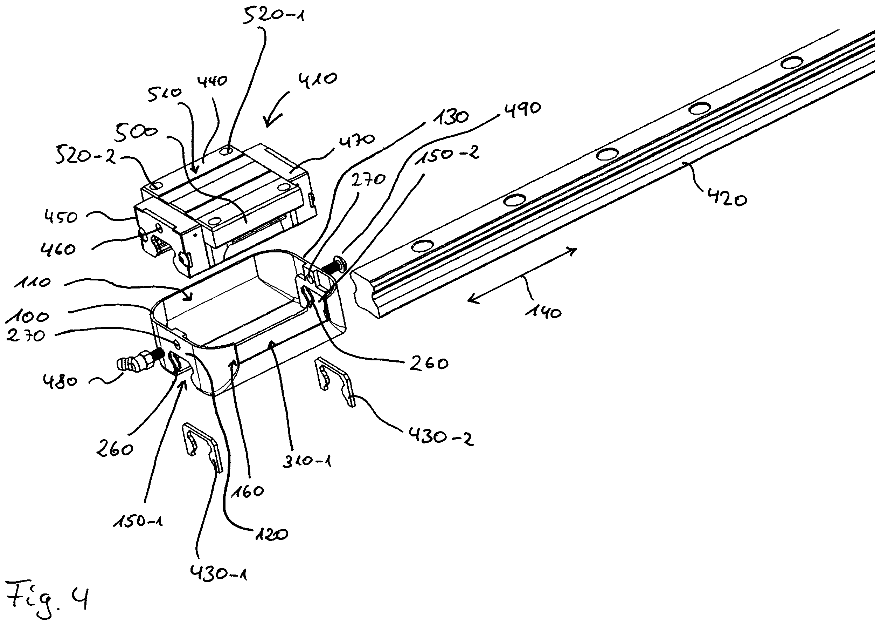

Die Unterseitenfläche 220 begrenzt hierbei den Innenraum 110 in einer Richtung, die sowohl senkrecht auf der Bewegungsrichtung 140 als auch auf der Richtung 180 steht. Bei Ausführungsbeispielen kann diese Richtung gegebenenfalls auch nur von der Richtung 180 verschieden sein.
Eine Oberseite 250, die sich an einer der Unterseite 220 gegenüberliegenden Seite befindet, wird durch die Abdeckung 100 wenigstens in einem Montagebereich des Profilschienenwagens offen gelassen. Bei dem in Fig. 1a gezeigten Ausführungsbeispiel lässt die Abdeckung 100 die Oberseite sogar vollständig offen, was bei einer nachträglichen Ausrüstung eines Profilschienenwagens mit einer Abdeckung 100 gemäß einem Ausführungsbeispiel eine Modifikation anderer Komponenten der Maschine gegebenenfalls überflüssig machen kann.
Das in Fig. 1a dargestellt Ausführungsbeispiel einer Abdeckung 100 weist ferner an beiden Ausnehmungen 150 in den beiden Stirnflächen 120, 130 jeweils eine Aufnahme 260 für ein Dichtelement auf, dass in Fig. 1a jedoch nicht gezeigte ist. Die Dichtelemente sind hierbei ausgebildet, um die jeweilige Stirnfläche 120, 130 gegen die Profilschiene abzudichten, um so ein Eindringen eines gasförmigen, flüssigen oder eines festen Mediums in den Innenraum 110 zu reduzieren oder sogar vollständig zu unterbinden. Bei dem in Fig. 1a gezeigten Ausführungsbeispiel sind die Aufnahmen 260 in Form eines doppelwandigen Bereichs ausgeführt, zwischen denen die entsprechenden Dichtelemente einbringbar sind.
Bei anderen Ausführungsbeispielen einer Abdeckung 100 können Dichtelemente an den Stirnflächen 120, 130 auch auf andere Arten und Weisen befestigt werden. Es ist beispielsweise möglich, ein entsprechendes Dichtelement mit der betreffenden Stirnfläche 120, 130 zu verkleben oder auch zu verschrauben. Ebenso ist es möglich, ein solches Dichtelement mithilfe einer anderen Verbindungsmethode, also beispielsweise einer Klemmung, im Bereich der entsprechenden Stirnflächen 120, 130 zu befestigen.
Anders ausgedrückt kann die aufgrund der zuvor beschriebenen Möglichkeit einer Implementierung eines Spalts mit einem geringen Spaltmaß erzeugte Spaltdichtung durch eine beispielsweise eingelegte Abstreifdichtung ergänzt oder ersetzt werden. Eine solche Dichtung stellt also ein Beispiel für einen umlaufenden Abstreifer dar, der ebenfalls eingearbeitet werden kann, um eine zusätzliche Abstreifwirkung zu erzielen. Als Dichtelemente kommen beispielsweise Dichtungen aus einem Gummi oder einem Kunststoff ebenso infrage, wie komplexere Dichtungen, also beispielsweise Kassettendichtungen.
Auch wenn bei dem in Fig. 1a gezeigten Ausführungsbeispiel einer Abdeckung 100 beide Ausnehmungen 150-1 und 150-2 in beiden Stirnflächen 120, 130 jeweils eine Aufnahme 260 für ein Dichtelement aufweisen, ist es selbstverständlich bei anderen Ausführungsbeispielen möglich, eine entsprechende Aufnahme oder ein Dichtelement an keiner Stirnfläche, nur an einer der beiden Stirnflächen 120, 130 oder auch an beiden vorzusehen. Mit anderen Worten handelt es sich bei diesen Dichtelementen bzw. ihren zugehörigen Aufnahmen 260 um optionale Komponenten.
Hinsichtlich der Befestigungsmöglichkeiten einer Abdeckung 100 für einen entsprechenden Profilschienenwagen ist es grundsätzlich möglich, sehr unterschiedliche Befestigungsmethoden zu verwenden. So können Ausführungsbeispiele beispielsweise mithilfe kraftschlüssiger, formschlüssiger oder auch stoffschlüssiger Verbindungen mit einem entsprechenden Profilschienenwagen verbunden werden. Weist beispielsweise einen Profilschienenwagen bereits eine nach außen geführte Struktur auf, kann diese gegebenenfalls verwendet werden, um eine Abdeckung oder Haube 100 gemäß einem Ausführungsbeispiel mit dem Profilschienenwagen zu verbinden. Weist beispielsweise der Profilschienenwagen einen nach außen geführten Schmiernippel auf, ist es beispielsweise möglich, die Abdeckung mithilfe von diesem an dem Profilschienenwagen zu befestigen.
Zu diesem Zweck weist das in Fig. 1a gezeigte Ausführungsbeispiel an beiden Stirnflächen 120, 130 jeweils eine weitere Ausnehmung 270 auf, die ausgebildet sind, um die Abdeckung 100 mit dem in Fig. 1a nicht gezeigten Profilschienenwagen mechanisch verbindbar zu machen. Zu diesem Zweck weist die Abdeckung 100 jeweils in einem materialverstärkten Bereich 280 der ersten Stirnfläche 120 eine weitere Ausnehmung 270-1 in Form einer Bohrung und in der zweiten Stirnfläche 130 ebenfalls in einem entsprechenden Material verstärkten Bereich eine zweite weitere Ausnehmung 270-2 in Form einer Bohrung auf. Wie nachfolgend im Zusammenhang mit den Figuren 3 und 4 noch erläutert wird, sind diese beiden weiteren Ausnehmungen 270 gerade derart ausgestaltet, dass sie mit einem Schmiernippel oder auch mit einem Gewindestift mit dem Profilschienenwagen verschraubbar sind. Selbstverständlich besteht jedoch auch die Möglichkeit, die Abdeckung 100 anderweitig mit dem Profilschienenwagen mechanisch zu verbinden.
Die Haube bzw. Abdeckung 100, die dem Profilschienenwagen "übergestülpt" werden kann, können hierbei ein Material aufweisen oder auch aus diesem vollständig gefertigt sein, bei dem es sich beispielsweise um ein Metall, eine Metalllegierung, ein Stahl (z. B. Nirostahl), ein Blech (z. B. Niroblech), einen Kunststoff oder ein Plastik handelt. Optional kann die Abdeckung auch lackiert, beschichtet oder metallbeschichtet sein. Eine solche Beschichtung kann beispielsweise Teflon oder Email umfassen. Eine solche Beschichtung oder Lackierung wird typischerweise an den dem Innenraum abgewandten Seiten der ersten Stirnfläche 120, der zweiten Stirnfläche 130, der ersten Seitenfläche 160, der zweiten Seitenfläche 170 und der Unterseitenfläche 220 aufgebracht, sofern die entsprechenden Flächen, also insbesondere die Unterseitenfläche, implementiert sind. Hierbei weisen die betreffenden Seiten typischerweise an wenigstens 80 % einer Oberfläche der einzelnen betreffenden Seiten die entsprechende Beschichtung oder Lackierung auf. Bei anderen Ausführungsbeispielen kann der Anteil der Gesamtfläche auch höher liegen, also beispielsweise bei 90 %, bei wenigstens 95 % oder bei der vollständigen Oberfläche. Es ist allerdings bei Weitem nicht notwendig, alle oder auch nur eine Mehrzahl der Seiten entsprechend auszugestalten. Bei Ausführungsbeispielen kann auch nur eine einzelne Seite entsprechend ausgestaltet sein.

Hierbei ist es möglich, die betreffenden Flächen derart auszugestalten, dass diese eine mittlere Rauheit von weniger als 100 µm, bei anderen Ausführungsbeispielen von weniger als 80 µm, von weniger als 50 µm oder auch von weniger als 20 µm aufweisen. Hierdurch kann also die Abdeckung mit einer ebenmäßigen Oberfläche versehen werden, sodass ein Anhaften von Schmutz, festen oder flüssigen Medien hierdurch verhindert oder zumindest reduziert wird, was zu einer einfacheren Reinigung des Profilschienenwagens bzw. seine Abdeckung 100 führen kann. Dies kann beispielsweise im Lebensmittelbereich oder auch im Futtermittelbereich vorteilhaft sein und wird häufig unter dem Schlagwort hygienisches Design (engl. Hygenic Design) zusammengefasst. Ein solches glattes Design der Abdeckung 100 und damit des in dem Innenraum angeordneten Profilschienenwagens bedeutet letztendlich, dass dieses System im Rahmen von Wartung oder Reinigungsarbeiten einfacher zu reinigen ist.

Ebenfalls kann durch eine entsprechende Materialwahl bzw. eine entsprechende Beschichtung oder Lackierung der Abdeckung 100 ein Korrosionsschutz erzielt werden, sodass gegebenenfalls bei der Herstellung des Profilschienenwagens nicht auf teure Spezialstähle (z. B. Nirostähle) zurückgegriffen werden muss. Anders ausgedrückt kann die Abdeckung 100 also ausgebildet sein, um einen Korrosionsschutz für den Profilschienenwagen zu bilden. Anders ausgedrückt kann eine solche Abdeckung in vielen Fällen eine aufwendige Verwendung von Nirostählen oder von Beschichtungen bei Profilschienenwagen ersetzen oder zumindest teilweise einsparen.

Je nach verwendetem Material, also insbesondere im Falle einer Metallausführung, aber ebenso im Falle einer entsprechenden Beschichtung oder Lackierung, ist es daher optional ergänzend möglich, eine Reflexion von Strahlung, die auf das System aus Profilschienenwagen und Abdeckung einwirkt, zu verbessern. Hierdurch kann gegebenenfalls ein Hitzeschutz für Kunststoffteile oder andere empfindliche Teile des Profilschienenwagens realisiert oder verbessert werden, wenn dieser beispielsweise an einer heißen Quelle, also an einem heißen Ofen oder einer anderen Strahlungsquelle vorbeifährt. Anders ausgedrückt können bei Ausführungsbeispielen eine Abdeckung 100 die erste Seitenfläche 160, die zweite Seitenfläche 170, die erste Stirnfläche 120 oder die zweite Stirnfläche 130 derart ausgebildet sein, dass eine Strahlung mit einer vorbestimmten Frequenz zumindest teilweise reflektiert wird. Bei dieser kann es sich um eine Infrarotstrahlung und/oder auch eine sichtbare Strahlung handeln, um nur zwei Beispiele zu nennen.

Fig. 1b zeigt ein weiteres Ausführungsbeispiel einer Abdeckung 100, die sich von der in Fig. 1a gezeigten Abdeckung lediglich hinsichtlich eines einzigen Aspekts unterscheidet. Während bei der in Fig. 1a gezeigten Abdeckung 100 die Zentralfläche 190 der ersten Seitenfläche 160 keine besondere Struktur aufweist, weist diese bei dem in Fig. 1b gezeigten Ausführungsbeispiel eine vorbestimmte Teilfläche 290 auf, die von einem materialgeschwächten Bereich 300 wenigstens teilweise umgeben ist, sodass die Teilfläche 290 entfernbar ist, um eine seitliche Ausnehmung zu bilden. Der materialgeschwächte Bereich 300 kann beispielsweise durch eine Verdünnung einer Wandstärke der Abdeckung 100 in diesem Bereich implementiert werden. Anders ausgedrückt kann die Abdeckung 100 in diesem Bereich eine Nut oder Rille aufweisen, sodass die vorbestimmte Teilfläche 290 aus der Abdeckung 100 herausgebrochen werden kann. Alternativ oder ergänzend kann der materialgeschwächte Bereich 300 ebenfalls mithilfe einer Perforation oder einer anderen Materialschwächung, also beispielsweise durch eine Verklebung gebildet sein. Im Falle einer Verklebung könnte die Abdeckung 100 dann derart gefertigt sein, dass die Abdeckung 100 die seitliche Ausnehmung bereits aufweist, dann jedoch nachträglich mit der Teilfläche 290 wieder verschlossen wurde.

Auch wenn bei dem in Fig. 1b gezeigten Ausführungsbeispiel einer Abdeckung 100 lediglich die erste Seitenfläche 160 eine entsprechende Teilfläche 290 aufweist, kann eine solche Teilfläche 290 selbstverständlich alternativ wie auch ergänzend im Bereich der zweiten Seitenfläche 170 vorgesehen sein. Anders ausgedrückt kann die optionale Teilfläche 290 zusammen mit dem entsprechenden materialgeschwächten Bereich bei Ausführungsbeispielen nicht, an nur einer der beiden Seitenflächen 160, 170 oder an beiden Seitenflächen 160, 170 vorgesehen sein. Auch diese ist also eine optionale Komponente.

Eine solche Teilfläche 290 kann vorgesehen sein, um nach ihrem Ausbrechen oder Entfernen und dem Entstehen der entsprechenden seitlichen Ausnehmung eine seitliche Teilfläche des in dem Innenraum der Abdeckung 100 angeordneten Profilschienenwagens zugänglich zu machen. Eine solche seitliche Teilfläche des Profilschienenwagens kann beispielsweise eine besonders genaue Position oder eine besonders genaue Dimensionierung oder Spezifikation aufweisen.

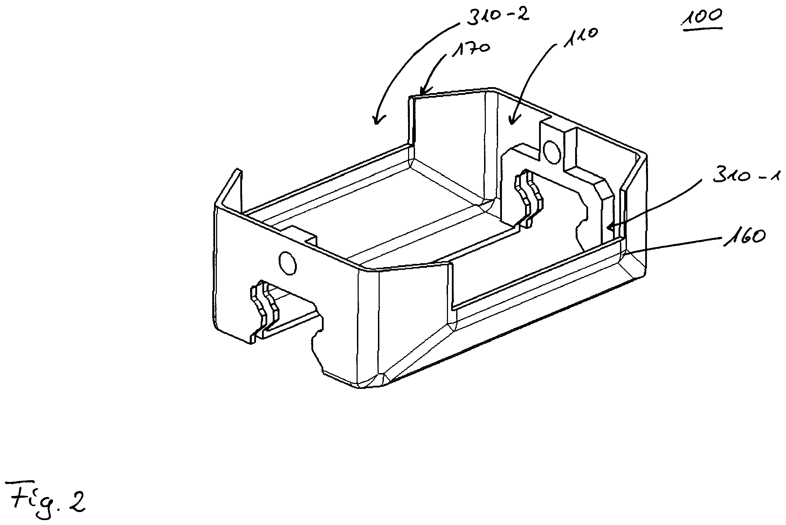

Fig.2 zeigt eine perspektivische Darstellung eines weiteren Ausführungsbeispiels einer Abdeckung 100, die sich von den zuvor beschriebenen Ausführungsbeispielen hinsichtlich der Ausgestaltung der ersten und zweiten Seitenfläche 160, 170 unterscheidet. Bei dem in Fig. 2 gezeigten Ausführungsbeispiel weisen diese beiden Seitenflächen 160, 170 jeweils eine seitliche Ausnehmung 310 auf. Genauer gesagt weist hierbei die erste Seitenfläche 160 eine erste seitliche Ausnehmung 310-1 und die zweite Seitenfläche 170 eine zweite seitliche Ausnehmung 310-2 auf. Wie bereits im Zusammenhang mit Fig. 1b erläutert wurde, ermöglichen diese beiden seitlichen Ausnehmungen 310 einen seitlichen Zugang zu einem in dem Innenraum 110 der Abdeckung 100 angeordneten Profilschienenwagen. Durch diese beiden seitlichen Ausnehmungen 310 ist es möglich, direkt auf eine entsprechende seitliche Teilfläche dieses Profilschienenwagens zuzugreifen.

Jede der beiden seitlichen Ausnehmungen 310 kann entweder bereits als solche in der Abdeckung 100 vorgesehen sein oder aber durch ein Entfernen eines vorbestimmten Teils 290, wie dies im Zusammenhang mit Fig. 1b erläutert wurde, durch ein entsprechendes Entfernen der Teilfläche 290 entstehen. Bei unterschiedlichen Ausführungsbeispielen können diese seitlichen Ausnehmungen 310 gegebenenfalls vollständig entfallen bzw. lediglich in einer der Seitenflächen 160, 170 oder in beiden Seitenflächen 160, 170 implementiert und vorgesehen sein. Anders ausgedrückt handelt es sich bei den seitlichen Ausnehmungen 310 um optionale Strukturen.

Fig.3 zeigt eine perspektivische Darstellung eines Systems 400 mit einer Abdeckung 100 und einem Profilschienenwagen 410, das auf einer Profilschiene 420 angeordnet ist. Fig.4 zeigt hierzu eine Explosionsdarstellung des in Fig.3 dargestellten Systems auf der Profilschiene 420.

Die bei dem System 400 verwendete Abdeckung 100 gemäß einem Ausführungsbeispiel entspricht der Fig. 1a gezeigten Abdeckung 100, wobei im Unterschied zu dieser die in den Figuren 3 und 4 gezeigten Abdeckung 100 in der ersten Seitenfläche 160 eine seitliche Ausnehmung 310-1 aufweist. Die Abdeckung 100 weist in dem Bereich der beiden Ausnehmungen 150-1, 150-2 jeweils eine Aufnahme 260 für ein Dichtelement auf. Das System 400 weist entsprechend ein erstes Dichtelement 430-1 und ein zweites Dichtelement 430-2 auf, die in den Aufnahmen 260 für die Dichtelemente aufgenommen sind. Aufgrund ihrer Lage und ihrer profilierten Ausformung, die wenigstens teilweise die Form der Profilschiene 420 nachbildet, sind in Fig. 3 weder die beiden Aufnahmen 260 noch die beiden Dichtelemente 430 zu sehen.

Der Profilschienenwagen 410 weist einen Körper bzw. Führungswagen 440 auf, indem sowohl der Lastbereich als auch der Rücklaufbereich für die Wälzkörper gebildet ist. Als Wälzkörper können grundsätzlich alle Formen von Wälzkörpern verwendet werden, also beispielsweise kugelförmige Wälzkörper, tonnenförmige Wälzkörper, zylinderförmige Wälzkörper oder nadelförmige Wälzkörper.

Der Profilschienenwagen 410 umfasst ferner ein erstes Bauteil 450, welches entlang der Bewegungsrichtung 140 an einer Stirnseite des Führungswagens 440 mit diesem verbunden ist. Das erste Bauteil 450 umfasst nicht nur einen Umlenkbereich für die Wälzkörper, der diese aus dem Lastbereich in den Rücklaufbereich bzw. aus dem Rücklaufbereich in den Lastbereich führt, sondern ebenso ein Schmiermittelreservoir. Das erste Bauteil 450 ist bei dem in den Figuren 3 und 4 gezeigten System gemäß einem Ausführungsbeispiel als einer Endplatte aus einem verstärkten Kunststoff gefertigt, die mit einer Vorsatzdichtung gegen ein Austreten des Schmierstoffs abgedichtet ist. Das erste Bauteil 450 umfasst so eine Schmiermittelöffnung 460, um die einen Zugang zu dem Schmiermittelreservoir des ersten Bauteils 450 bietet.

Entsprechend weist der Profilschienenwagen 410 an der Stirnseite des Führungswagens 440, die dem ersten Bauteil abgewandt und entlang der Bewegungsrichtung 140 angeordnet ist, ein zweites Bauteil 470 auf, welches ebenfalls einen Umlenkbereich sowie optional ein weiteres Schmiermittelreservoir umfasst. Ist ein entsprechendes Schmiermittelreservoir implementiert, so kann ferner auch das zweite Bauteil 470 eine Schmiermittelöffnung aufweisen, die der Schmiermittelöffnung 460 des ersten Bauteils 450 ähnelt. Aufgrund der perspektivischen Darstellung in den Figuren 3 und 4 sind diese jedoch nicht zu sehen.

Wird der Profilschienenwagen 410 in den Innenraum 110 der Abdeckung 100 eingebracht, kann bei dem in den Figuren 3 und 4 gezeigten Ausführungsbeispiel die Abdeckung 100 mit dem Profilschienenwagen 410 durch ein weiteres Bauteil 480 verbunden werden, dass in die Schmiermittelöffnung 460 des ersten Bauteils 450 einbringbar ist. Hierbei ist die weitere Ausnehmung 270 der Abdeckung an der ersten Stirnfläche 120 derart ausgebildet und positioniert, dass diese in einer Ebene senkrecht zu der Bewegungsrichtung 140 mit der Schmiermittelöffnung 460 fluchtet. Das weitere Bauteil 480, das durch die weitere Ausnehmung 270 in der ersten Stirnfläche 120 in die Schmiermittelöffnung 460 des ersten Bauteils 150 eingreift, ist ein Schmiermittelnippel, der eine manuelle Nachschmierung des Führungswagens 440 bzw. des Profilschienenwagens 410 ermöglicht.

Das in den Figuren 3 und 4 gezeigte Ausführungsbeispiel weist auch in Bezug auf das zweite Bauteil 470 eine entsprechende Schmiermittelöffnung auf, die mit der weiteren Ausnehmung 270 der zweiten Stirnfläche 130 ebenfalls in einer senkrecht zu der Bewegungsrichtung 140 stehenden Ebene fluchtet. Auch diese Schmiermittelöffnung wird über die weitere Ausnehmung 270 an der zweiten Stirnfläche 130 der Abdeckung 100 mit einem zweiten weiteren Bauteil 490 mechanisch verbunden. Im Unterschied zu dem weiteren Bauteil 480 handelt es sich bei dem zweiten weiteren Bauteil jedoch um einen Gewindestift, der in das optionale Schmiermittelreservoir des zweiten Bauteils 400 nicht eingreift.

Wie zu Beginn der Beschreibung des in den Figuren 3 und 4 gezeigten Ausführungsbeispiels bereits erwähnt wurde, weist die Abdeckung 100 im Unterschied zu der in Fig. 1a gezeigten Abdeckung 100 eine seitliche Ausnehmung 310-1 in der ersten Seitenfläche 160 auf. Diese ermöglicht einen Zugang zu einer seitlichen Teilfläche 500 des Profilschienenwagens 410. Genauer gesagt handelt es sich bei der seitlichen Teilfläche 500 um eine des Führungswagens 440. Diese weist einen besonders genau spezifizierten Abstand zu einer Ausnehmung des Führungswagens 440, in denen die Profilschiene 420 während des Betriebs angeordnet ist und die zumindest teilweise die Laufbahn umfasst, die dem Lastbereich angehört. Bei anderen Ausführungsbeispielen kann es sich bei der seitlichen Teilfläche 500 um eine solche handeln, die beispielsweise eine besondere Oberflächenrauigkeit, eine besondere Ausrichtung oder eine andere, entsprechende Spezifikation aufweist.

Fig. 3 illustriert darüber hinaus, dass die Abdeckung 100 die Oberseite wenigstens in einem Montagebereich 510 des Profilschienenwagens 410 offen lässt. Der Montagebereich 510 wird durch eine Oberfläche des Führungswagens 440 gebildet, die neben vier Bohrungen 520 ebenfalls zwei Nute 530 aufweist. Mithilfe der beiden Nute 530 sowie der Bohrungen 520, bei denen es sich beispielsweise um Gewindebohrungen handeln kann, können so weitere Bauteile oder Baugruppen einer Maschine mit dem Profilschienenwagen 410 bzw. dem Führungswagen 440 mechanisch verbunden werden. Die Nute 530 verlaufen hierbei entlang der Bewegungsrichtung 140 und ermöglichen so beispielsweise eine formschlüssige Verbindung in einer Richtung senkrecht zu der Bewegungsrichtung 140.

Wie jedoch beispielsweise Fig. 3 zeigt, lässt bei diesen Systemen 400 die Abdeckung 100 die Oberseite 250 vollständig offen.

Da bei dem in den Figuren 3 und 4 gezeigten Ausführungsbeispiel sowohl das erste Bauteil 450 als auf das zweite Bauteil 470 eine geringere Breite als der Führungswagen 440 aufweist, bilden sich so Hohlräume zwischen der Abdeckung 100 und dem Profilschienenwagen 410. Diese Hohlräume können beispielsweise zur Geräuschdämmung ausgeschäumt werden. Anders ausgedrückt kann die Abdeckung 100 dadurch Geräusch dämmend wirken, indem z. B. eine zusätzliche Schaumschicht in dem Innenraum angebracht wird. Hierdurch weist somit die Abdeckung in dem Innenraum an wenigstens einem Teil der ersten Seitenfläche 160, der zweiten Seitenfläche 170, der ersten Stirnseite 120 oder der zweiten Stirnseite 130 ein geräuschdämmendes Material auf. Bei diesem kann es sich um einen entsprechenden geräuschdämmenden Schaum aus Polyurethan oder einem anderen geeigneten Material handeln.

Wie auch die Darstellung in Fig. 3 zeigt, ermöglicht es eine Abdeckung 100 gemäß einem Ausführungsbeispiel eine dieser Verbesserung der Lineareinheit zu schaffen. So ist im Vergleich zu dem Profilschienenwagen 410, wie er in Fig. 4 einzelnen dargestellt ist, eine Verbesserung einer Strömungseigenschaft möglich, wenn sich beispielsweise der Profilschienenwagen bzw. das System aus Profilschienenwagen und Abdeckung durch ein gasförmiges, flüssiges oder festes (z. B. granulares) Medium bewegt. Durch die runden Formen der Abdeckung 100 wird ein Strömungswiderstandswert und damit eine Widerstandskraft, die auf das System wirkt, reduziert. Anders ausgedrückt kann durch die neuen Möglichkeiten, die die Umhüllung mit einer Abdeckung 100 gemäß einem Ausführungsbeispiel bietet und die im weitesten Sinn dem Industriedesign zuzurechnen sind, eine Reduzierung des Energieverbrauchs im Falle einer Bewegung entlang der Profilschiene 420 realisierbar sein.

Darüber hinaus kann die Abdeckung 100 auch als Stoßschutz für Plastik-Umlenkbereiche wie die ersten und zweiten Bauteile 450, 470 wirken. So kann durch eine entsprechende konstruktive Ausgestaltung der Abdeckung 100 ein in dem Innenraum 110 der Abdeckung 100 angeordneter Profilschienenwagen 410 gegen einen Stoß aus der Bewegungsrichtung 140 beispielsweise bis zu einer vorbestimmten kinetischen Energie geschützt werden. Zu diesem Zweck kann die Abdeckung 100 so ausgelegt sein, dass sie durch zusätzliche an den Innenflächen der Abdeckung 100 angebrachter Verstärkungen oder anderer Strukturen bei einem Stoß oder bei einem Aufprall entstehende bzw. übertragene kinetischen Energie wenigstens zum Teil aufnimmt. Je nach verwendetem Material für die Abdeckung 100 bzw. den entsprechenden Strukturen kann so diese Energie wenigstens teilweise in eine elastische, plastische oder thermische Energie umgewandelt werden. Je nach konkreter Ausgestaltung kann hierbei gegebenenfalls die Abdeckung 100 auch teilweise beschädigt oder zerstört werden, um den in dem Innenraum angeordneten Profilschienenwagen zu schützen.

Die vorbestimmte kinetische Energie, bis zu der eine Abdeckung 100 gemäß einem Ausführungsbeispiel im Falle einer entsprechenden Auslegung einen Profilschienenwagen schützen kann, kann beispielsweise einer kinetischen Energie entsprechen, die durch eine Gesamtmasse der Abdeckung 100, des Profilschienenwagens 410 und einer maximal zulässigen Belastung des Profilschienenwagens bei einem Zehntel einer für den Profilschienenwagen maximal zulässigen Geschwindigkeit gegeben ist. Bei anderen Ausführungsbeispielen kann der Bruchteil der Geschwindigkeit im Verhältnis zu der maximal zulässigen Geschwindigkeit auch höher liegen, also beispielsweise bei einem Fünftel, einem Viertel, einem Drittel, der Hälfte oder sogar bei der vollständigen maximal zulässigen Geschwindigkeit.

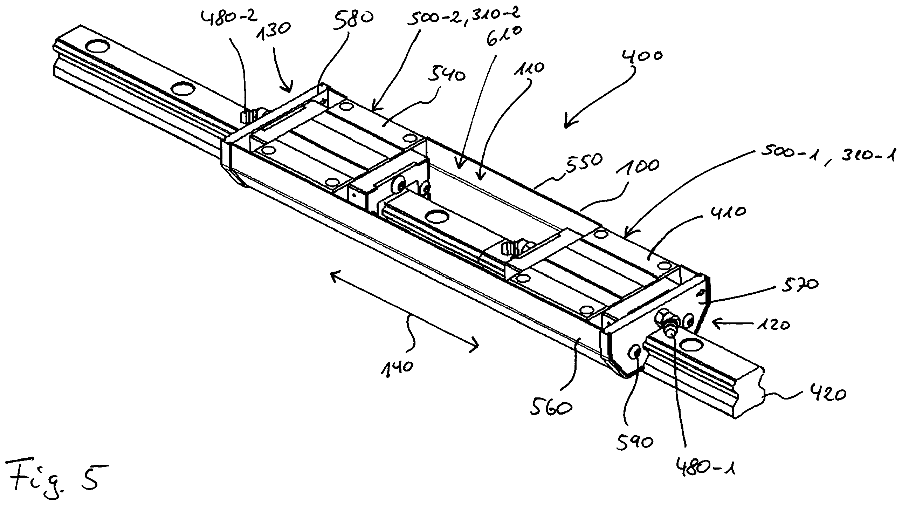

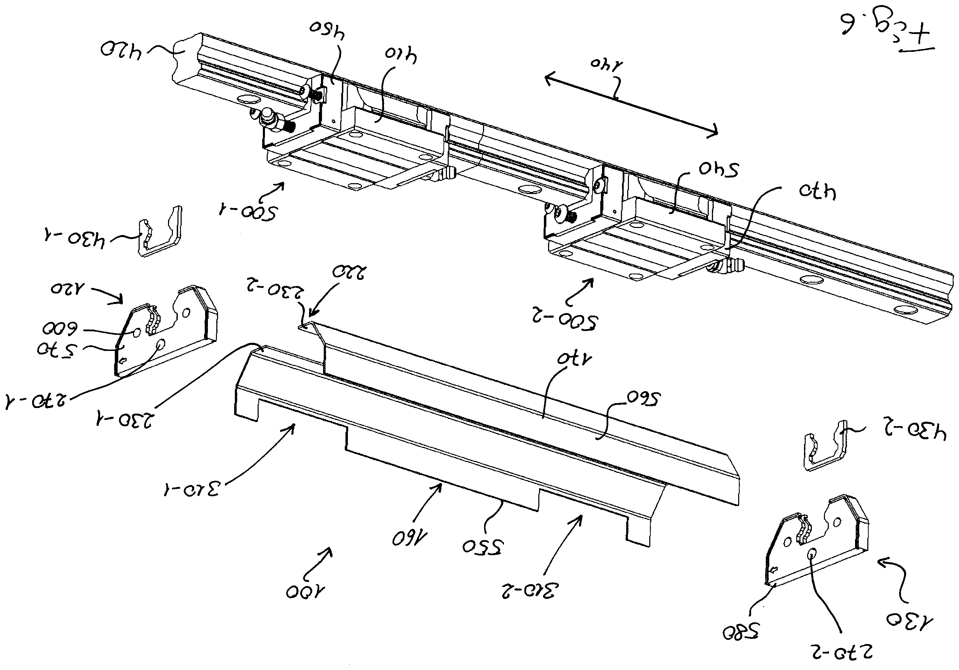

Die Figuren 5 und 6 zeigen ein weiteres Ausführungsbeispiel einer Abdeckung 100 und eines Systems 400 mit einer Abdeckung 100 und einem Profilschienenwagen 410. Hierbei zeigen Fig. 5 eine perspektivische Darstellung und Fig. 6 eine entsprechende Explosionsdarstellung.
Das in den Figuren 5 und 6 gezeigte Ausführungsbeispiel unterscheidet sich von den zuvor gezeigten beschriebenen Ausführungsbeispielen hinsichtlich mehrerer Aspekte. So weist das System 400 zunächst neben dem Profilschienenwagen 410 einen zweiten Profilschienenwagen 540 auf, der ebenfalls in dem Innenraum 110 der Abdeckung 100 angeordnet ist. Anders ausgedrückt ist die Abdeckung 100 ausgebildet, um einen weiteren Profilschienenwagen 540 in dem Innenraum 110 aufzunehmen. Die Abdeckung 100 erstreckt sich daher entlang der Bewegungsrichtung 140 über eine größere länger als dies bei den zuvor beschriebenen Ausführungsbeispielen der Fall war. Der zweite Profilschienenwagen 540 sowie der erste Profilschienenwagen 410 entsprechen hierbei hinsichtlich ihrer konstruktiven Ausgestaltung dem in den Figuren 3 und 4 gezeigten.
Darüber hinaus ist die Abdeckung 100 im Unterschied zu den zuvor beschriebenen Ausführungsbeispielen nicht mehr einstückig bzw. einteilig ausgeführt, sondern mehrteilig. Genauer gesagt weist die Abdeckung 100 ein erstes Seitenbauteil 550 auf, das zumindest einen Teil der ersten Seitenfläche 160 und einen Teil der Unterseitenfläche, genauer gesagt die untere Teilfläche 230-1 umfasst. Die Abdeckung 100 umfasst ferner ein zweites Seitenbauteil 560, das die zweite Seitenfläche 170 zumindest teilweise und einen Teil der Unterseitenfläche 220, nämlich die untere Teilfläche 230-2 umfasst. Darüber hinaus umfasst die Abdeckung 100 ferner ein erstes Stirnseitenbauteil 570, welches die erste Stirnfläche 120 umfasst. Entsprechend weist die Abdeckung 100 an einer dem ersten Stirnseitenbauteil 570 abgewandten Seite entlang der Bewegungsrichtung 140 ein zweites Stirnseitenbauteil 580 auf, welches die zweite Stirnfläche 130 umfasst. Beide Stirnseitenbauteile 570, 580 weisen entsprechende Aufnahmen (vgl. z. B. Aufnahmen 260 aus Fig. 1a bis 3) auf, in die Dichtelemente 430-1, 430-2 einbringbar sind. Wie bei den bereits zuvor beschriebenen Ausführungsbeispielen handelt es sich bei den entsprechenden Aufnahmen 260 sowie den Dichtelementen 430 um optionale Komponenten, die an keiner der beiden Stirnflächen, einer der beiden Stirnflächen oder an beiden Stirnflächen implementiert werden können.

Die beiden Stirnseitenbauteile 570, 580 sind bei dem in den Figuren 5 und 6 gezeigten Ausführungsbeispiel mithilfe von jeweils zwei Schrauben 590 und entsprechenden Bohrungen 600 in den Stirnseitenbauteilen 570, 580 mit den beiden Profilschienenwagen 410, 540 verschraubt. Darüber hinaus weisen die beiden Stirnseitenbauteile 570, 580 jedoch ebenso weitere Ausnehmung 270-1 und 270-2 auf, die mit entsprechenden Schmiermittel-öffnungen des ersten Bauteils 450 des Profilschienenwagens 410 bzw. des zweiten Bauteils 470 des zweiten Profilschienenwagens 540 in einer Ebene senkrecht zu der Bewegungsrichtung 140 jeweils fluchten. So sind bei dem in den Figuren 5 und 6 gezeigten Ausführungsbeispiel die beiden Stirnseitenbauteile 570, 580 mit dem ersten Profilschienenwagen 410 und dem zweiten Profilschienenwagen 540 jeweils ebenfalls noch über ein erstes weiteres Bauteil 480-1 und eines zweiten weiteren Bauteils 480-2 in Form zweier Schmiernippel verbunden.

Hierdurch weisen die beiden Profilschienenwagen 410, 540 in dem Innenraum 110 der Abdeckung 100 einen vorbestimmten Abstand auf. Anders ausgedrückt bildet sich zwischen den beiden Profilschienenwagen 410, 540 ein Zwischenraum 610 aus, der beispielsweise für konstruktive Elemente für die beiden Profilschienenwagen verwendbar ist.

Ausführungsbeispiele der vorliegenden Erfindung in Form einer Abdeckung 100 können daher gegebenenfalls auch den Bedarf erfüllen, mehr als nur einen Einzelwagen, beispielsweise zwei oder mehr Profilschienenwagen, auf einer einzigen Führung in einem entsprechenden Abstand abzudecken. Dieser Abstand ist typischerweise im Falle einer bestimmten Abdeckung 100 vorbestimmt, kann jedoch bei verschiedenen Ausführungsbeispielen variabel ausgestaltet sein. Hierbei können zwischen den stirnseitigen Haltekappen bzw. Stirnseitenbauteilen 570, 580 ein in der Länge bei verschiedenen Ausführungsbeispielen variabel ausgelegtes Abdeckprofil bzw. entsprechende Seitenbauteile 550, 560 eingebracht werden. Wie bei den bereits zuvor beschriebenen Ausführungsbeispielen können auch hier die Stirnseitenbauteile 570, 580 oder auch die Seitenbauteile 550, 560 die zuvor genannten Materialien aufweisen. So können diese Bauteile beispielsweise ein Metall, eine Metalllegierung, einen Stahl, ein Blech oder einen Kunststoff aufweisen. Optional können hier ebenfalls Abstreifer oder Dichtungen 430 in den Haltekappen bzw. Stirnseitenbauteilen 570, 580 vorgesehen werden.

Ähnlich dem in den Figuren 3 und 4 gezeigten Ausführungsbeispiel eines Systems 400 weist auch das in den Figuren 5 und 6 gezeigte System seitliche Ausnehmungen 310 in der ersten Seitenfläche 160 auf. Im Unterschied zu dem zuvor gezeigten Ausführungsbeispiel weist hier jedoch die erste Seitenfläche - und damit das erste Seitenbauteil 550 - eine erste seitliche Ausnehmung 310-1 und eine zweite seitliche Ausnehmung 310-2 auf. Über die seitliche Ausnehmung 310-1 ist so eine seitliche Teilfläche 500-1 des ersten Profilschienenwagens 410 offengelegt und damit für konstruktive Zwecke erreichbar. Entsprechend ist über eine seitliche Ausnehmung 310-2 eine zweite seitliche Teilfläche 500-2 des zweiten Profilschienenwagens 540 entsprechend offen und für konstruktive Zwecke zugänglich.

Das in den Figuren 5 und 6 gezeigte Ausführungsbeispiel stellte so eine Variantenkonstruktion dar, bei der die Abdeckung 100 ausgebildet ist, um nicht nur einen einzelnen Profilschienenwagen 410, sondern mehr als einen Profilschienenwagen in dem entsprechenden Innenraum 110 der Abdeckung 100 aufzunehmen. Auch wenn in den beiden Figuren lediglich ein Ausführungsbeispiel mit zwei Profilschienenwagen gezeigt ist, sind Ausführungsbeispiele selbstverständlich nicht auf diese Anzahl von Profilschienenwagen beschränkt. So können bei Ausführungsbeispielen einer Abdeckung 100 oder eines Systems 400 mit einer Abdeckung 100 ausgebildet sein, um in ihrem Innenraum 110 eine Mehrzahl von Profilschienenwagen 410, 540 aufzunehmen.

Selbstverständlich können anstelle eines Ausführungsbeispiels mit einer Mehrzahl von Profilschienenwagen auch eine entsprechende Mehrzahl von Systemen zum Einsatz kommen, bei denen in einer Abdeckung 100 beispielsweise jeweils ein einzelner Profilschienenwagen angeordnet ist.

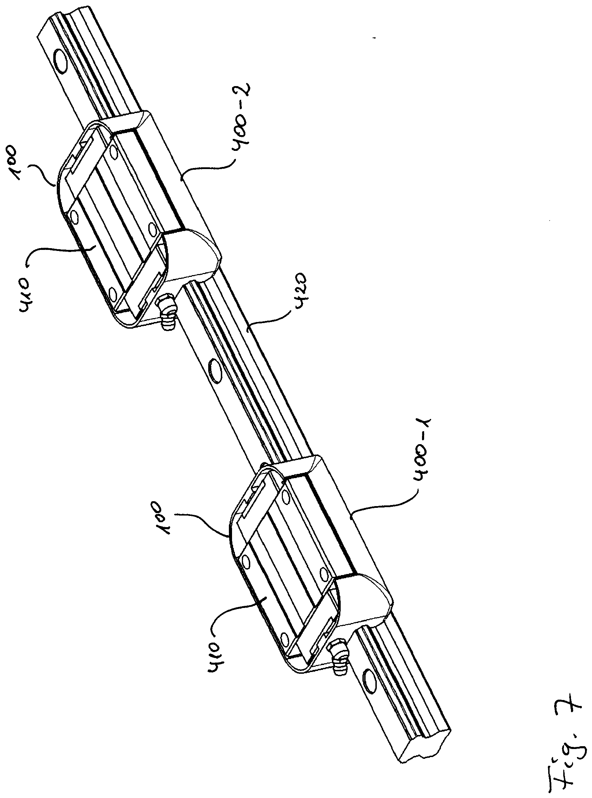

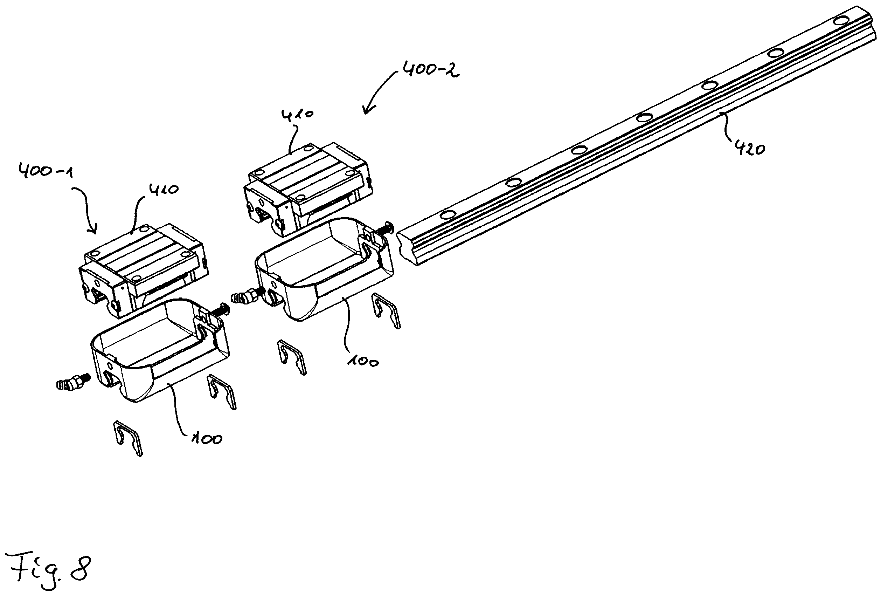

Eine solche Anordnung mehrerer Ausführungsbeispiele von Systemen 400 ist in der perspektivischen Darstellung in Fig. 7 und als Explosionsdarstellung in Fig. 8 gezeigt. So zeigen diese beiden Figuren ein erstes System 400-1 und ein zweites System 400-2, die auf einer gemeinsamen Profilschiene 420 angeordnet sind. Die beiden Systeme 400 umfassen jeweils eine Abdeckung 100 gemäß einem Ausführungsbeispiel sowie einen Profilschienenwagen 410, wie diese zuvor im Zusammenhang mit den Figuren 3 und 4 beschrieben wurden.

Allerdings sind auch hier Ausführungsbeispiele bei Weitem nicht auf diese konkrete Ausgestaltung von Abdeckungen 100 bzw. Profilschienenwagen 410 beschränkt. So können auch hier unterschiedlichste Abdeckungen 100 gemäß Ausführungsbeispielen im Rahmen entsprechender Systeme 400 zum Einsatz kommen. Ebenfalls ist die Anzahl der betreffenden Systeme, die zu einem System zusammengefasst werden können, bei Weitem nicht auf zwei beschränkt. Vielmehr können eine Vielzahl entsprechender Systeme auf einer Profilschiene angeordnet werden. Je nach konkreter Ausgestaltung kann es hierbei sinnvoll sein, durch konstruktive Maßnahmen einer Baugruppe oder eines Bauteils, das mit den Profilschienenwagen 410 der Systeme 400 mechanisch verbunden wird, einen vorbestimmten Abstand zwischen den betreffenden Profilschienenwagen bzw. den betreffenden Systemen einzustellen. Dieser kann bei verschiedenen Ausführungsbeispielen selbstverständlich wiederum variabel sein.

Anwendung finden Ausführungsbeispiele der vorliegenden Erfindung bei unterschiedlichsten Linearsystemen. Hinsichtlich ihrer Längen können so Profilschienenwagen von Größen von wenigen Zentimetern (z. B. 2 cm) bis hin zu mehreren Metern eingesetzt werden. Entsprechend groß ist beispielsweise ebenso der Bereich der zulässigen Belastungen.

Auch im Hinblick auf die Umwelteinflüsse können Ausführungsbeispiele unterschiedlichen gasförmigen, flüssigen oder festen Medien (z. B. granularen Medien) ausgesetzt sein. So können Ausführungsbeispiele ebenso im Lebensmittelbereich bzw. im Futtermittelbereich eingesetzt werden, wie auch im Baumaschinenbereich und den anderen Industriebereichen. Ebenso können Ausführungsbeispiele bei unterschiedlichen Temperaturen, Drücken oder Strahlungen zum Einsatz kommen. Ausführungsbeispiele können ebenso im Bereich aggressiver chemischer, beispielsweise korrosiv wirkender oder ätzender Medien zum Einsatz kommen.

### Bezugszeichenliste

- 100: Abdeckung
- 110: Innenraum
- 120: erste Stirnfläche
- 130: zweite Stirnfläche
- 140: Bewegungsrichtung
- 150: Ausnehmung
- 160: erste Seitenfläche
- 170: zweite Seitenfläche
- 180: Richtung
- 190: zentrale Fläche
- 200: Zwischenfläche
- 210: Rundungsbereich
- 220: Unterseitenfläche
- 230: untere Teilfläche
- 240: Längsausnehmung
- 250: Oberseite
- 260: Aufnahme für Dichtelement
- 270: weitere Ausnehmung
- 280: materialverstärkter Bereich
- 290: vorbestimmte Teilfläche
- 300: materialgeschwächter Bereich
- 310: seitliche Ausnehmung
- 400: System
- 410: Profilschienenwagen
- 420: Profilschiene
- 430: Dichtelement
- 440: Führungswagen
- 450: erstes Bauteil
- 460: Schmiermittelöffnung
- 470: zweites Bauteil
- 480: weiteres Bauteil
- 490: zweites weiteres Bauteil
- 500: seitliche Teilfläche
- 510: Montagebereich
- 520: Bohrung
- 530: Nut
- 540: zweiter Profilschienenwagen
- 550: erstes Seitenbauteil
- 560: zweites Seitenbauteil
- 570: erstes Stirnseitenbauteil
- 580: zweites Stirnseitenbauteil
- 590: Schraube
- 600: Bohrung
- 610: Zwischenraum

## Patentansprüche

1. Abdeckung (100) zur Aufnahme eines Profilschienenwagens (410) in einem Innenraum (110) der Abdeckung (100), mit einer ersten Stirnfläche (120) und einer zweiten Stirnfläche (130), die an in einer Bewegungsrichtung (140) des Profilschienenwagens (410) gegenüberliegenden Seiten den Innenraum (110) in der Bewegungsrichtung (140) begrenzen; und
einer ersten Seitenfläche (160) und einer zweiten Seitenfläche (170), die an in einer zu der Bewegungsrichtung (140) des Profilschienenwagens (410) senkrechten Richtung (180) gegenüberliegenden Seiten den Innenraum (110) in der senkrechten Richtung (180) begrenzen,
wobei die Stirnflächen (120, 130) jeweils eine Ausnehmung (150) aufweisen;
wobei die Ausnehmungen (150) eine Form aufweisen, sodass eine Profilschiene (420) die Ausnehmungen (150) wenigstens mit einem Teil ihrer Querschnittsform passieren kann, um dem in dem Innenraum (110) angeordneten Profilschienenwagen (410) eine Bewegung entlang der Profilschiene (420) zu ermöglichen; und
wobei die Abdeckung (100) eine Oberseite (250) wenigstens in einem Montagebereich (300) des Profilschienenwagens (410) offen lässt.

2. Abdeckung (100) nach Anspruch 1, bei der die Abdeckung (100) die Oberseite (250) vollständig offen lässt.

3. Abdeckung (100) nach einem der vorhergehenden Ansprüche, bei der wenigstens eine der Ausnehmungen (150) in den Stirnflächen (120, 130) ein Dichtelement (430) aufweist, das ausgebildet ist, um die Stirnfläche (120, 130) gegen die Profilschiene (420) abzudichten, um ein Eindringen eines gasförmigen, eines flüssigen oder eines festen Mediums in den Innenraum (110) zu reduzieren oder zu unterbinden.

4. Abdeckung (100) nach einem der vorhergehenden Ansprüche, bei der die Abdeckung (100) an wenigstens 80% einer Gesamtoberfläche der dem Innenraum abgewandten Seiten der ersten Seitenfläche (120), der zweiten Seitenfläche (130), der ersten Stirnfläche (160) und der zweiten Stirnfläche (170) eine Oberfläche mit einer mittleren Rauheit von weniger als 100 µm, eine Beschichtung, die beispielsweise Teflon oder Email umfasst, oder eine Lackierung aufweist.

5. Abdeckung (100) nach einem der vorhergehenden Ansprüche, bei der die Abdeckung (100) in dem Innenraum (110) an wenigstens einem Teil der ersten Seitenfläche (160), der zweiten Seitenfläche (170), der ersten Stirnseite(120) oder der zweiten Stirnseite (130) ein geräuschdämmendes Material aufweist.

6. Abdeckung (100) nach einem der vorhergehenden Ansprüche, bei der die Abdeckung (100) ausgebildet ist, um einen in dem Innenraum (110) angeordneten Profilschienenwagen (410) gegen einen Stoß aus der Bewegungsrichtung (140) bis zu einer vorbestimmten kinetischen Energie zu schützen.

7. Abdeckung (100) nach Anspruch 6, bei der die vorbestimmte kinetische Energie einer kinetischen Energie entspricht, die durch eine Gesamtmasse der Abdeckung (100), des Profilschienenwagens (410) und einer maximal zulässigen Belastung des Profilschienenwagens bei einem Zehntel einer für den Profilschienenwagen maximal zulässigen Geschwindigkeit gegeben ist.

8. Abdeckung (100) nach einem der vorhergehenden Ansprüche, bei der die erste Seitenfläche (160), die zweite Seitenfläche (170), die erste Stirnfläche (120) oder die zweite Stirnfläche (130) derart ausgebildet ist, dass eine Strahlung mit einer vorbestimmten Frequenz zumindest teilweise reflektiert wird, beispielsweise eine Infrarotstrahlung und/oder eine sichtbare Strahlung.

9. Abdeckung (100) nach einem der vorhergehenden Ansprüche, bei der die Abdeckung (100) ausgebildet ist, um einen weiteren Profilschienenwagen (540) in dem Innenraum (110) aufzunehmen.

10. Abdeckung (100) nach Anspruch 10, bei der die Abdeckung derart ausgebildet ist, dass der Profilschienenwagen (410) und der weitere Profilschienenwagen (540) einen vorbestimmten Abstand aufweisen.

11. Abdeckung (100) nach einem der vorhergehenden Ansprüche, bei der die Abdeckung (100) einteilig ausgeführt ist.

12. Abdeckung (100) nach einem der vorhergehenden Ansprüche, bei der wenigstens eine der Seitenflächen (160, 170) eine seitliche Ausnehmung (310) oder eine vorbestimmte Teilfläche (290) aufweist, wobei die Teilfläche von einem materialgeschwächten Bereich (300) wenigstens teilweise umgeben ist, sodass die Teilfläche (290) entfernbar ist, um die seitliche Ausnehmung (310) zu bilden, sodass durch die seitliche Ausnehmung (310) eine seitliche Teilfläche (500) des Profilschienenwagens (410) zugänglich ist.

13. Abdeckung (100) nach einem der vorhergehenden Ansprüche, bei der die Abdeckung (100) geometrisch derart ausgebildet ist, dass eine Strömungseigenschaft des Profilschienenwagens (410) verbessert wird.

14. System (400) mit einem Profilschienenwagen (410) und einer Abdeckung (100) nach einem der vorhergehenden Ansprüche, wobei der Profilschienenwagen (410) in dem Innenraum (110) angeordnet ist, wobei der Profilschienenwagen (410) ein in der Bewegungsrichtung (140) des Profilschienenwagens (110) angeordnetes Bauteil (450) mit einem Schmiermittelreservoir aufweist, wobei das Bauteil (450) eine in die Bewegungsrichtung weisende Schmiermittelöffnung (460) aufweist, sodass durch die Schmiermittelöffnung (460) das Schmiermittelreservoir nachfüllbar ist, wobei wenigstens eine Stirnfläche (120, 130) der Abdeckung (100) eine weitere Ausnehmung (270) aufweist, sodass die Abdeckung (100) über die weitere Ausnehmung (270) mit einem in die Schmiermittelöffnung (260) einbringbaren weiteren Bauteil (480) mit dem Profilschienenwagen (410) verbunden ist.

15. System (400) nach Anspruch 14, das ferner einen zweiten Profilschienenwagen (540) aufweist, wobei der Profilschienenwagen (410) über das weitere Bauteil (470) mit der ersten Stirnfläche (120) der Abdeckung (100) verbunden ist, wobei der zweite Profilschienenwagen (540) ein in der Bewegungsrichtung (140) des zweiten Profilschienenwagens (540) angeordnetes zweites Bauteil (470) mit einem Schmiermittelreservoir aufweist, wobei das zweite Bauteil (470) eine in die Bewegungsrichtung (140) weisende Schmiermittelöffnung aufweist, sodass durch die Schmiermittelöffnung das Schmiermittelreservoir nachfüllbar ist, wobei die zweite Stirnfläche (130) der Abdeckung (100) eine zweite weitere Ausnehmung (270) aufweist, sodass die Abdeckung (100) über die zweite weitere Ausnehmung (270) mit einem in die Schmiermittelöffnung des zweiten Bauteils (470) einbringbaren zweiten weiteren Bauteil (490) mit dem zweiten Profilschienenwagen (540) verbunden ist.

## Claims

1. Covering (100) for receiving a profiled rail carriage (410) in an interior (110) of the covering (100), comprising:
a first end face (120) and a second end face (130) which, on sides which are opposite a movement direction (140) of the profiled rail carriage (410), delimit the interior (110) in the movement direction (140); and
a first side face (160) and a second side face (170) which, on sides which are opposite in a direction (180) perpendicular to the movement direction (140) of the profiled rail carriage (410), delimit the interior (110) in the perpendicular direction (180),
wherein the end faces (120, 130) each have a cutout (150);
wherein the cutouts (150) have a shape, with the result that a profiled rail (420) can pass through the cutouts (150) at least with a part of their cross-sectional shape in order to allow the profiled rail carriage (410) arranged in the interior (110) to move along the profiled rail (420); and
wherein the covering (100) leaves open an upper side (250) at least in a mounting region (300) of the profiled rail carriage (410).

2. Covering (100) according to Claim 1, in which the covering (100) completely leaves open the upper side (250) .

3. Covering (100) according to one of the preceding claims, in which at least one of the cutouts (150) in the end faces (120, 130) has a sealing element (430) which is designed to seal the end face (120, 130) against the profiled rail (420) in order to reduce or to prevent penetration of a gaseous, a liquid or a solid medium into the interior (110).

4. Covering (100) according to one of the preceding claims, in which the covering (100) has, on at least 80% of a total surface area of the sides of the first side face (120), the second side face (130), the first end face (160) and the second end face (170) that face away from the interior, a surface with an average roughness of less than 100 µm, a coating, which for example comprises Teflon or enamel, or a lacquering.

5. Covering (100) according to one of the preceding claims, in which the covering (100) has a noise-damping material in the interior (110) on at least a part of the first side face (160), the second side face (170), the first end side (120) or the second end side (130).

6. Covering (100) according to one of the preceding claims, in which the covering (100) is designed to protect a profiled rail carriage (410) arranged in the interior (110) against a jolt out of the movement direction (140) up to a predetermined kinetic energy.

7. Covering (100) according to Claim 6, in which the predetermined kinetic energy corresponds to a kinetic energy which is given by a total mass of the covering (100), of the profiled rail carriage (410) and a maximum allowable loading of the profiled rail carriage for a tenth of a maximum allowable speed for the profiled rail carriage.

8. Covering (100) according to one of the preceding claims, in which the first side face (160), the second side face (170), the first end face (120) or the second end face (130) is designed in such a way that a radiation with a predetermined frequency is at least partially reflected, for example an infrared radiation and/or a visible radiation.

9. Covering (100) according to one of the preceding claims, in which the covering (100) is designed to receive a further profiled rail carriage (540) in the interior (110).

10. Covering (100) according to Claim 10, in which the covering is designed in such a way that the profiled rail carriage (410) and the further profiled rail carriage (540) have a predetermined spacing.

11. Covering (100) according to one of the preceding claims, in which the covering (100) is of one-part design.

12. Covering (100) according to one of the preceding claims, in which at least one of the side faces (160, 170) has a lateral cutout (310) or a predetermined partial surface (290), wherein the partial surface is at least partially surrounded by a material-weakened region (300), with the result that the partial surface (290) can be removed in order to form the lateral cutout (310), with the result that a lateral partial surface (500) of the profiled rail carriage (410) is accessible through the lateral cutout (310).

13. Covering (100) according to one of the preceding claims, in which the covering (100) is geometrically designed in such a way that a flow property of the profiled rail carriage (410) is improved.

14. System (400) having a profiled rail carriage (410) and a covering (100) according to one of the preceding claims, wherein the profiled rail carriage (410) is arranged in the interior (110), wherein the profiled rail carriage (410) has a component (450) which is arranged in the movement direction (140) of the profiled rail carriage (110) and which has a lubricant reservoir, wherein the component (450) has a lubricant opening (460) which points in the movement direction, with the result that the lubricant reservoir can be replenished through the lubricant opening (460), wherein at least one end face (120, 130) of the covering (100) has a further cutout (270), with the result that the covering (100) is connected to the profiled rail carriage (410) via the further cutout (270) by a further component (480) which can be introduced into the lubricant opening (260) .

15. System (400) according to Claim 14, which further has a second profiled rail carriage (540), wherein the profiled rail carriage (410) is connected via the further component (470) to the first end face (120) of the covering (100), wherein the second profiled rail carriage (540) has a second component (470) which is arranged in the movement direction (140) of the second profiled rail carriage (540) and which has a lubricant reservoir, wherein the second component (470) has a lubricant opening which points in the movement direction (140), with the result that the lubricant reservoir can be replenished through the lubricant opening, wherein the second end face (130) of the covering (100) has a second further cutout (270), with the result that the covering (100) is connected to the second profiled rail carriage (540) via the second further cutout (270) by a second further component (490) which can be introduced into the lubricant opening of the second component (470).

## Revendications

1. Recouvrement (100) destiné à recevoir un chariot de rail profilé (410) dans un espace interne (110) du recouvrement (100), comprenant
une première surface frontale (120) et une deuxième surface frontale (130), qui délimitent l'espace interne (110) dans la direction de déplacement (140) au niveau de côtés opposés dans une direction de déplacement (140) du chariot de rail profilé (410) ; et
une première surface latérale (160) et une deuxième surface latérale (170), qui délimitent l'espace interne (110) dans la direction verticale (180), au niveau de côtés opposés dans une direction perpendiculaire (180) à la direction de déplacement (140) du chariot de rail profilé (410),
les surfaces frontales (120, 130) présentant chacune un évidement (150) ;
les évidements (150) présentant une forme telle qu'un rail profilé (420) puisse passer à travers les évidements (150) au moins avec une partie de sa forme en section transversale, afin de permettre au chariot de rail profilé (410) disposé dans l'espace interne (110) de se déplacer le long du rail profilé (420) ; et
le recouvrement (100) laissant ouvert un côté supérieur (250) au moins dans une région de montage (300) du chariot de rail profilé (410).

2. Recouvrement (100) selon la revendication 1, dans lequel le recouvrement (100) laisse ouvert complètement le côté supérieur (250).

3. Recouvrement (100) selon l'une quelconque des revendications précédentes, dans lequel au moins l'un des évidements (150) dans les surfaces frontales (120, 130) présente un élément d'étanchéité (430) qui est réalisé de manière à étanchéifier la surface frontale (120, 130) par rapport au rail profilé (420) afin de réduire ou de supprimer la pénétration d'un milieu gazeux, fluide ou solide dans l'espace interne (110).

4. Recouvrement (100) selon l'une quelconque des revendications précédentes, dans lequel le recouvrement (100) présente, au niveau d'au moins 80 % d'une surface totale des côtés opposés à l'espace interne de la première surface latérale (120), de la deuxième surface latérale (130), de la première surface frontale (160) et de la deuxième surface frontale (170), une surface avec une rugosité moyenne inférieure à 100 µm, un revêtement, qui présente par exemple du téflon ou de l'émail, ou un vernis.

5. Recouvrement (100) selon l'une quelconque des revendications précédentes, dans lequel le recouvrement (100) présente, dans l'espace interne (110) au niveau d'au moins une partie de la première surface latérale (160), de la deuxième surface latérale (170), du premier côté frontal (120) ou du deuxième côté frontal (130), un matériau d'atténuation des sons.

6. Recouvrement (100) selon l'une quelconque des revendications précédentes, dans lequel le recouvrement (100) est réalisé de manière à protéger un chariot de rail profilé (410) disposé dans l'espace interne (110) contre un choc à partir de la direction de déplacement (140) jusqu'à une énergie cinétique prédéterminée.

7. Recouvrement (100) selon la revendication 6, dans lequel l'énergie cinétique prédéterminée correspond à une énergie cinétique qui est donnée par une masse totale du recouvrement (100), du chariot de rail profilé (410) et d'une sollicitation maximale admissible du chariot de rail profilé à une vitesse correspondant à un dixième d'une vitesse maximale admissible pour le chariot de rail profilé.

8. Recouvrement (100) selon l'une quelconque des revendications précédentes, dans lequel la première surface latérale (160), la deuxième surface latérale (170), la première surface frontale (120) ou la deuxième surface frontale (130) sont réalisées de telle sorte qu'un rayonnement avec une fréquence prédéterminée soit au moins en partie réfléchi, par exemple un rayonnement infrarouge et/ou un rayonnement visible.

9. Recouvrement (100) selon l'une quelconque des revendications précédentes, dans lequel le recouvrement (100) est réalisé de manière à recevoir un chariot de rail profilé supplémentaire (540) dans l'espace interne (110).

10. Recouvrement (100) selon la revendication 10, dans lequel le recouvrement est réalisé de telle sorte que le chariot de rail profilé (410) et le chariot de rail profilé supplémentaire (540) présentent un espacement prédéterminé.

11. Recouvrement (100) selon l'une quelconque des revendications précédentes, dans lequel le recouvrement (100) est réalisé d'une seule pièce.

12. Recouvrement (100) selon l'une quelconque des revendications précédentes, dans lequel au moins l'une des surfaces latérales (160, 170) présente un évidement latéral (310) ou une surface partielle prédéterminée (290), la surface partielle étant au moins en partie entourée par une région d'affaiblissement de matériau (300) de telle sorte que la surface partielle (290) puisse être enlevée pour former l'évidement latéral (310) de telle sorte qu'une surface partielle latérale (500) du chariot de rail profilé (410) soit accessible à travers l'évidement latéral (310).

13. Recouvrement (100) selon l'une quelconque des revendications précédentes, dans lequel le recouvrement (100) est réalisé sous forme géométrique de telle sorte qu'une propriété d'écoulement du chariot de rail profilé (410) soit améliorée.

14. Système (400) comprenant un chariot de rail profilé (410) et un recouvrement (100) selon l'une quelconque des revendications précédentes, dans lequel le chariot de rail profilé (410) est disposé dans l'espace interne (110), le chariot de rail profilé (410) présentant un composant (450) disposé dans la direction de déplacement (140) du chariot de rail profilé (110), avec un réservoir de lubrifiant, le composant (450) présentant une ouverture de lubrifiant (460) tournée dans la direction de déplacement de telle sorte que le réservoir de lubrifiant puisse être rempli par l'ouverture de lubrifiant (460), au moins une surface frontale (120, 130) du recouvrement (100) présentant un évidement supplémentaire (270) de telle sorte que le recouvrement (100) soit connecté au chariot de rail profilé (410) par le biais de l'évidement supplémentaire (270) avec un composant supplémentaire (480) pouvant être introduit dans l'ouverture de lubrifiant (260).

15. Système (400) selon la revendication 14, présentant en outre un deuxième chariot de rail profilé (540), le chariot de rail profilé (410) étant connecté par le biais du composant supplémentaire (470) à la première surface frontale (120) du recouvrement (100), le deuxième chariot de rail profilé (540) présentant un deuxième composant (470) avec un réservoir de lubrifiant disposé dans la direction de déplacement (140) du deuxième chariot de rail profilé (540), le deuxième composant (470) présentant une ouverture de lubrifiant tournée dans la direction de déplacement (140) de telle sorte que le réservoir de lubrifiant puisse être rempli par l'ouverture de lubrifiant, la deuxième surface frontale (130) du recouvrement (100) présentant un deuxième évidement supplémentaire (270) de telle sorte que le recouvrement (100) soit connecté au deuxième chariot de rail profilé (540) par le biais du deuxième évidement supplémentaire (270) avec un deuxième composant supplémentaire (490) pouvant être introduit dans l'ouverture de lubrifiant du deuxième composant (470) .
